# EUROPÄISCHE PATENTANMELDUNG

(11) **EP 4 645 544 A1**
(43) Veröffentlichungstag der Anmeldung: **05.11.2025**
(21) Anmeldenummer: 25170335.1
(22) Anmeldetag: 14.04.2025
(51) Int. Cl.: H01M 50/209, H01M 50/291, H01M 50/264

(54) **GEHÄUSE**

(30) Priorität: 02.05.2024 DE 102024112322
(71) Anmelder: DEUTZ Aktiengesellschaft, 51149 Köln (DE)
(72) Erfinder: Hoffmann, Oliver Günther, 53501 Grafschaft (DE)

(57) **Zusammenfassung**

Ein Gehäuse (1) umfassend: ein erstes Gehäuseelement (2), das sich in Form eines Prismas entlang einer Längsachse (L_2) erstreckt, wobei das erste Gehäuseelement (2) eine erste Seitenwand (4) und eine zweite Seitenwand (6) aufweist, zwischen denen sich ein Tragabschnitt (3) erstreckt, der eine erste Tragebene (E_T2) aufspannt, und ein zweites Gehäuseelement (15), das so mit dem ersten Gehäuseelement (2) verbunden ist, dass eine erste Gehäusekammer (37) von dem ersten Gehäuseelement (2) und dem zweiten Gehäuseelement (15) begrenzt ist, wobei ein Lagerelement zum Lagern des Gehäuses (1) gegenüber einem angrenzenden Element über eine erste Schraube mit dem ersten Gehäuseelement (2) verbindbar ist, und die erste Schraube in eine Gewindebohrung (8) des ersten Gehäuseelements (2) eingreift, die Gewindebohrung (8) zumindest abschnittsweise in der ersten Tragebene (E_T2) angeordnet ist und eine Bohrungsachse (L_8) der Gewindebohrung (8) parallel zu der ersten Tragebene (E_T2) angeordnet ist.

## Beschreibung

Die vorliegende Erfindung betrifft ein Gehäuse, insbesondere für einen Energiespeicher.

Gehäuse für Energiespeicher haben die Aufgabe den Energiespeicher aufzunehmen und vor Umwelteinflüssen zu schützen. Des Weiteren können Gehäuse für Energiespeicher Schnittstellen zur Übergabe der elektrischen Energie zwischen einzelnen Batterien oder an eine elektrische Last umfassen.

Aus der DE 10 2022 000 414 A1 ist ein Gehäuse für einen Energiespeicher bekannt, das mehrere übereinander gestapelte prismatische Gehäuseelemente umfasst. An den Stirnseiten des Gehäuses sind Deckelelemente mit den Gehäuseelementen verschweißt, in denen Anbindungen für ein Lagerelement ausgebildet sind.

Hiervon ausgehend liegt der Erfindung die Aufgabe zur Grunde, ein Gehäuse vorzuschlagen, dass eine Lagerung gegenüber angrenzenden Elementen ermöglicht und eine hohe Dauerhaltbarkeit aufweist.

Zur Lösung der der Erfindung zu Grunde liegenden Aufgabe wird ein Gehäuse, insbesondere für einen Energiespeicher, vorgeschlagen, umfassend: ein erstes Gehäuseelement; das sich in Form eines Prismas mit einer Grundfläche entlang einer Längsachse erstreckt, wobei das erste Gehäuseelement an einer ersten Längsseite eine erste Seitenwand und an einer zweiten Längsseite eine zweite Seitenwand aufweist, zwischen denen sich ein Tragabschnitt erstreckt, der eine erste Tragebene aufspannt, und ein zweites Gehäuseelement; das so quer zu der Längsachse von dem Tragabschnitt beabstandet und mit dem ersten Gehäuseelement verbunden ist, dass eine erste Gehäusekammer von dem ersten Gehäuseelement und dem zweiten Gehäuseelement begrenzt ist, wobei ein Lagerelement zum Lagern des Gehäuses gegenüber einem angrenzenden Element über eine erste Schraube mit dem ersten Gehäuseelement verbindbar ist, und wobei die erste Schraube in eine Gewindebohrung des ersten Gehäuseelements eingreift, die Gewindebohrung zumindest abschnittsweise in der ersten Tragebene angeordnet ist und eine Bohrungsachse der Gewindebohrung parallel zu der ersten Tragebene angeordnet ist.

Das erfindungsgemäße Gehäuse weist den Vorteil auf, dass die von dem Lagerelement auf das Gehäuse einwirkenden Lagerkräfte unmittelbar von dem Tragabschnitt abgestützt werden. Es entfallen somit weitere Schnittstellen, wie Schweißnähte, die von der Lagerkraft beansprucht werden. In Summe kann so die Dauerhaltbarkeit des Gehäuses erhöht werden.

Als Prisma im Sinne dieser Erfindung soll ein geometrischer Körper bezeichnet sein, der durch Parallelverschiebung oder Extrusion einer ebenen Grundfläche entlang einer Achse, die quer zu der ebenen Grundfläche verläuft, entsteht. Ein Prisma wird dabei beispielsweise durch die Extrusion durch eine polygone formgebende Öffnung hergestellt. Insofern kann das Getriebeelement durch Extrusion oder Strangpressen hergestellt sein. Unter dem Getriebeelement in Form eines Prismas im Sinne dieser Erfindung soll auch verstanden werden, dass das Getriebeelement eine prismatische Grundform aufweist, die nachträglich eingebrachte Bearbeitungen enthält, sodass das Getriebeelement zumindest abschnittsweise prismatisch ist. Insofern kann das Getriebeelement durch Extrusion oder Strangpressen hergestellt sein und nachfolgende spanende Bearbeitungen aufweisen.

Als Längsseite eines Gehäuseelementes sollen die Seiten des Gehäuseelementes verstanden werden, die parallel zu der Längsachse angeordnet sind. Dementsprechend sind die Stirnseiten des Getriebeelementes quer zu der Längsachse und auch zu den Längsseiten angeordnet. Daher können die Stirnseiten auch als Querseiten bezeichnet werden.

Die in der Anmeldung beschriebenen Tragabschnitte spannen jeweils eine Tragebene so auf, dass die Tragebene durch den geometrischen Schwerpunkt der Querschnittsfläche des jeweiligen Tragabschnitts hindurch verläuft.

In einer möglichen Ausführungsform kann die Bohrungsachse der Gewindebohrung des ersten Gehäuseelements in der ersten Tragebene angeordnet sein.

In einer möglichen Ausführungsform kann das zweite Gehäuseelement in Form eines Prismas ausgestaltet sein, das sich in eine Richtung parallel zu der Längsachse mit einer Grundfläche erstreckt. Das zweite Gehäuseelement kann an einer ersten Längsseite eine erste Seitenwand und an einer zweiten Längsseite eine zweite Seitenwand aufweisen, zwischen denen sich ein Tragabschnitt erstreckt, der eine zweite Tragebene aufspannt. Das Lagerelement kann über eine zweite Schraube mit dem zweiten Gehäuseelement verbindbar sein. Die zweite Schraube kann in eine Gewindebohrung des zweiten Gehäuseelements eingreifen. Eine Bohrungsachse der Gewindebohrung kann parallel zu der zweiten Tragebene angeordnet sein. Die Bohrungsachse der Gewindebohrung des zweiten Gehäuseelements kann insbesondere in der zweiten Tragebene angeordnet sein. Die Gewindebohrung kann alternativ oder in Kombination zumindest abschnittsweise in der zweiten Tragebene angeordnet sein.

In einer weiteren möglichen Ausführungsform kann ein drittes Gehäuseelement in Form eines Prismas ausgestaltet sein, das sich in eine Richtung parallel zu der Längsachse mit einer Grundfläche erstreckt. Das dritte Gehäuseelement kann an einer ersten Längsseite eine erste Seitenwand und an einer zweiten Längsseite eine zweite Seitenwand aufweisen, zwischen denen sich ein Tragabschnitt erstreckt, der eine dritte Tragebene aufspannt. Das dritte Gehäuseelement kann so quer zu der Längsachse von dem Tragabschnitt des zweiten Gehäuseelements beabstandet und mit dem zweiten Gehäuseelement verbunden sein, dass eine zweite Gehäusekammer durch das zweite Gehäuseelement und das dritte Gehäuseelement begrenzt ist. Das zweite Gehäuseelement und das dritte Gehäuseelement können die gleiche prismatische Form respektive die gleiche Grundfläche des Prismas aufweisen. Das dritte Gehäuseelement kann eine Gewindebohrung aufweisen. Die Gewindebohrung kann zumindest abschnittsweise in der dritten Tragebene angeordnet sein. Eine Bohrungsachse der Gewindebohrung kann parallel zu der dritten Tragebene angeordnet sein. Die Bohrungsachse der Gewindebohrung des dritten Gehäuseelements kann insbesondere in der dritten Tragebene angeordnet sein.

Die Gewindebohrung des zweiten Gehäuseelements kann komplementär zu der ersten Schraube und zu der zweiten Schraube ausgebildet sein. Die Gewindebohrung des dritten Gehäuseelements kann komplementär zu der zweiten Schraube ausgebildet sein.

In einer möglichen Ausführungsform können die erste Tragebene, die zweite Tragebene und die dritte Tragebene parallel ausgerichtet sein. Der Abstand zwischen der ersten Tragebene und der zweiten Tragebene kann gleich dem Abstand zwischen der zweiten Tragebenen und der dritten Tragebene sein.

In einer möglichen Ausführungsform kann das Lagerelement einen Verbindungsabschnitt aufweisen, der in Anlage mit der ersten Seitenwand des ersten Gehäuseelements und/ oder mit der ersten Seitenwand des zweiten Gehäuseelements ist. Der Verbindungsabschnitt des Lagerelements kann einen ersten Passabschnitt und einen zweiten Passabschnitt aufweisen. Das erste Gehäuseelement kann eine Ausnehmung aufweisen. Die Ausnehmung des ersten Gehäuseelements kann komplementär zu dem ersten Passabschnitt ausgestaltet sein. Das zweite Gehäuseelement kann eine Ausnehmung aufweisen. Die Ausnehmung des zweiten Gehäuseelements kann komplementär zu dem ersten Passabschnitt und dem zweiten Passabschnitt ausgestaltet sein. Das dritte Gehäuseelement kann eine Ausnehmung aufweisen. Die Ausnehmung des dritten Gehäuseelements kann komplementär zu dem zweiten Passabschnitt ausgestaltet sein.

In einer möglichen Ausführungsform kann das Lagerelement einen Auflageabschnitt aufweisen, über den das Lagerelement mit dem angrenzenden Element in Anlage bringbar ist. Der Auflageabschnitt kann sich quer zu dem Verbindungsabschnitt erstrecken.

In einer möglichen Ausführungsform kann die erste Seitenwand des ersten Gehäuseelements in Anlage mit der ersten Seitenwand des zweiten Gehäuseelements sein. Die zweite Seitenwand des ersten Gehäuseelements kann in Anlage mit der zweite Seitenwand des zweiten Gehäuseelements sein.

In einer möglichen Ausführungsform kann an einer ersten Stirnseite des Gehäuses eine erste Stirnseitenabdeckung mit dem ersten Gehäuseelement verbunden sein. An einer zweiten Stirnseite des Gehäuses kann eine zweite Stirnseitenabdeckung mit dem ersten Gehäuseelement verbunden sein. An der ersten Stirnseite des Gehäuses kann eine dritte Stirnseitenabdeckung mit dem zweiten Gehäuseelement verbunden sein. An der zweiten Stirnseite des Gehäuses kann eine vierte Stirnseitenabdeckung mit dem zweiten Gehäuseelement verbunden sein. Die erste Gehäusekammer kann von dem ersten Gehäuseelement, dem zweiten Gehäuseelement, der ersten Stirnseitenabdeckung, der zweiten Stirnseitenabdeckung, der dritten Stirnseitenabdeckung und der vierten Stirnseitenabdeckung begrenzt sein.

Nachfolgend werden anhand der Figuren Ausführungsbeispiele des erfindungsgemäßen Gehäuses erläutert. Hierin zeigt:
- Figur 1: eine perspektivische Ansicht eines erfindungsgemäßen Gehäuses für einen Energiespeicher mit den Lagerelementen in einer ersten Position,
- Figur 2: eine Frontansicht des Gehäuses aus Figur 1;
- Figur 3: einen Querschnitt durch das Gehäuse aus Figur 1, wobei nur das Bodenelement und zwei Zwischenelemente dargestellt sind;
- Figur 4: eine Detailansicht des Details IV aus Figur 3;
- Figur 5: eine Detailansicht des Details V aus Figur 1;
- Figur 6: eine perspektivische Ansicht des Gehäuses aus Figur 1 mit den Lagerelementen in einer zweiten Position, und
- Figur 7: eine Frontansicht des Gehäuses aus Figur 6.

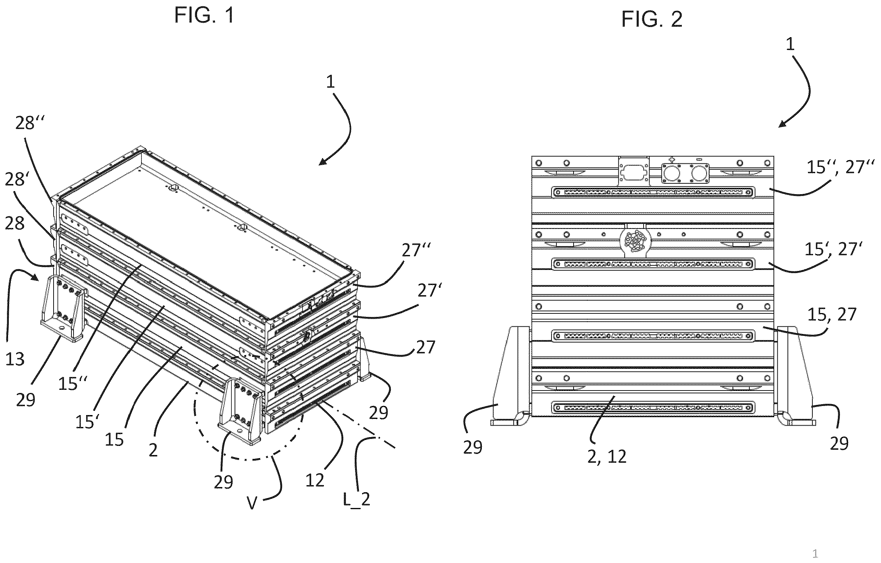

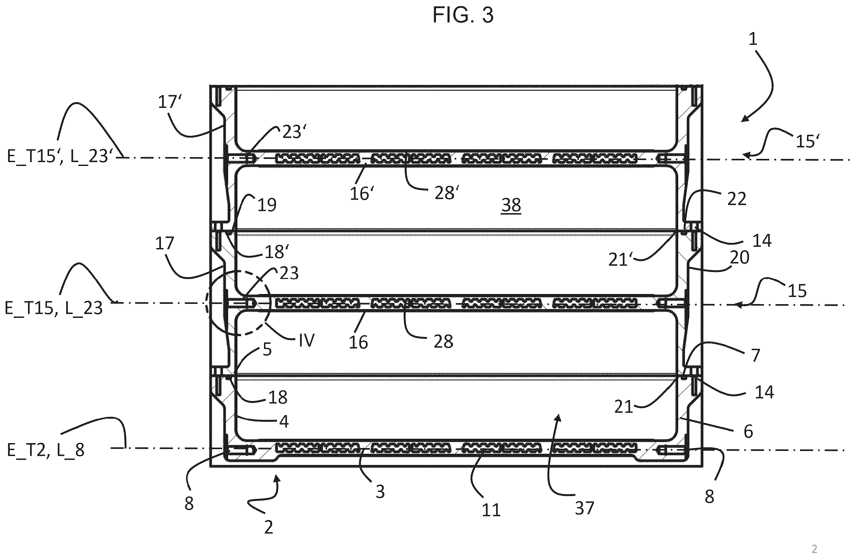

In den Figuren 1 bis 7, die nachfolgend gemeinsam beschrieben werden, ist ein erfindungsgemäßes Gehäuse 1 gezeigt, bei dem mehrere Gehäuseelemente so übereinandergestapelt sind, dass mehrere Gehäusekammern von den Gehäuseelementen begrenzt werden.

Das Gehäuse 1 umfasst ein erstes Gehäuseelement in Form eines Bodenelements 2.

Das Bodenelement 2 weist eine prismatische Grundform auf und erstreckt sich mit einer Grundfläche entlang der Längsachse L_2. Die Grundfläche des Bodenelementes 2 ist vorliegend U-förmig ausgestaltet, wobei einer ersten Längsseite eine erste Seitenwand 4 und an einer zweiten Längsseite eine zweite Seitenwand 6 ausgebildet sind. Die erste Seitenwand 4 weist an einem ersten Ende eine ebene Aufnahmefläche 5 auf, die auch als Verbindungsfläche bezeichnet werden kann. Die zweite Seitenwand 6 weist an einem Ende eine ebene Aufnahmefläche 7 auf, die auch als Verbindungsfläche bezeichnet werden kann. Die Aufnahmeflächen können auch als Flanschflächen bezeichnet werden. Das Bodenelements 2 ist aus einem Strangepressrohteil hergestellt.

Zwischen der ersten Seitenwand 4 und der zweiten Seitenwand 6 erstreckt sich ein ebener Tragabschnitt 3. Der Tragabschnitt 3 ist dabei jeweils an dem der Aufnahmefläche 5, 7 abgewandten Ende der jeweiligen Seitenwand 4, 6 mit diesen verbunden. Der Tragabschnitt 3 beschreibt eine erste Tragebene E_T2. In dem Tragabschnitt 3 sind Kühlkanäle 11 ausgebildet, die sich in eine Richtung parallel zu der Längsachse L_2 erstrecken und von Kühlmittel durchströmbar sind. Auf dem Tragabschnitt 3 kann ein Batteriemodule aufgesetzt werden. Mit anderen Worten können Batteriemodule von den Tragabschnitt 3 abgestützt respektive getragen werden.

Das Bodenelement 2 umfasst mehrere Gewindebohrungen 8, die sich entlang einer Bohrungsachse L_8 durch die erste Seitenwand 4 in den Tragabschnitt 3 erstrecken. Die Bohrungsachse L_8 ist parallel zu der ersten Tragebene E_T2 ausgerichtet. Im vorliegenden Fall liegt die Bohrungsachse L_8 in der ersten Tragebene E_T2. Die Gewindebohrungen 8 sind als Sacklochbohrung ausgeführt.

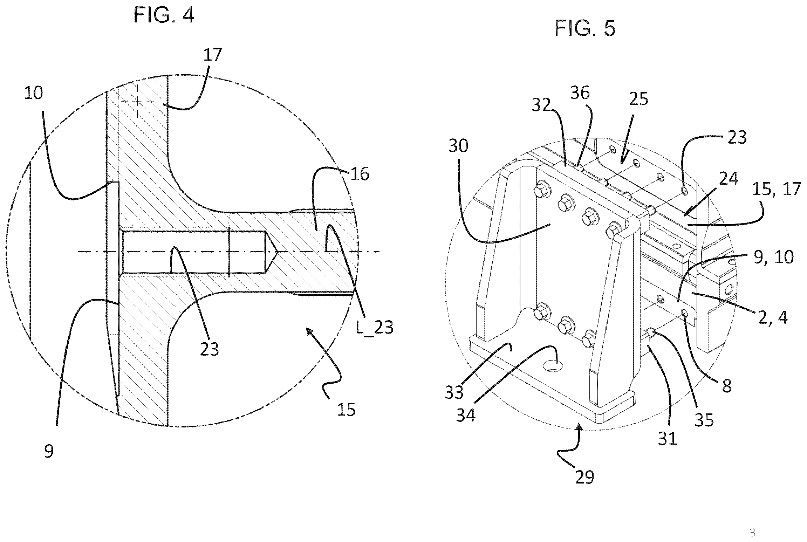

Im Bereich eines ersten axialen Endes der ersten Seitenwand 4 sind vier dieser Gewindebohrungen 8 nebeneinander vorgesehen, wie insbesondere aus der Zusammenschau der Figuren 1 und 5 erkennbar ist. Diese erstrecken sich jeweils durch eine Auflagefläche 9, die von einer Ausnehmung 10 in dem Bodenelement 2 gebildet wird. Die Ausnehmung 10 wird durch Bearbeitung des Strangpressrohteils des Bodenelements 2 gebildet. Im Bereich des zweiten axialen Endes der ersten Seitenwand 4, des ersten axialen Endes der zweiten Seitenwand 6 und des zweiten axialen Endes der zweiten Seitenwand 6 sind weitere Gruppen von jeweils vier Gewindebohrungen 8 nebeneinander vorgesehen. Diese erstrecken sich ebenfalls durch eine Auflagefläche 9, die von einer Ausnehmung 10 gebildet wird.

Das Gehäuse 1 umfasst darüber hinaus eine erste Stirnseitenabdeckung 12, die an einer ersten Stirnseite des Bodenelements 2 mit diesem verbunden ist, und eine zweite Stirnseitenabdeckung 13, die an einer zweiten Stirnseite des Bodenelementes 2 mit diesem verbunden ist. Die erste und die zweite Stirnseitenabdeckung 12, 13 sind jeweils mit dem Bodenelement 2 verschweißt.

Das Gehäuse 1 umfasst darüber hinaus ein zweites Gehäuseelement in Form eines Zwischenelements 15. Das Zwischenelement 15 weist eine prismatische Grundform auf und erstreckt sich mit einer Grundfläche in eine Richtung parallel zu der Längsachse L_2. Die Grundfläche des Zwischenelementes 15 ist vorliegend H-förmig ausgestaltet, wobei einer ersten Längsseite eine erste Seitenwand 17 und an einer zweiten Längsseite eine zweite Seitenwand 20 ausgebildet sind. Die erste Seitenwand 17 weist an einem ersten Ende eine ebene untere Aufnahmefläche 18 auf, die auch als Verbindungsfläche bezeichnet werden kann. Die erste Seitenwand 17 weist an einem zweiten Ende eine ebene obere Aufnahmefläche 19 auf, die auch als Verbindungsfläche bezeichnet werden kann. Die zweite Seitenwand 20 weist an einem ersten Ende eine ebene untere Aufnahmefläche 21 auf, die auch als Verbindungsfläche bezeichnet werden kann. Die zweite Seitenwand 20 weist an einem zweiten Ende eine ebene obere Aufnahmefläche 22 auf, die auch als Verbindungsfläche bezeichnet werden kann.

Zwischen der ersten Seitenwand 17 und der zweiten Seitenwand 20 erstreckt sich ein ebener Tragabschnitt 16. Der Tragabschnitt 16 ist dabei jeweils zwischen den unteren Aufnahmefläche 18, 21 und den oberen Aufnahmeflächen 19, 22 der jeweiligen Seitenwand 4, 6 mit diesen verbunden. Der Tragabschnitt 16 beschreibt eine zweite Tragebene E_T15. Die zweite Tragebene E_T15 ist parallel zu der ersten Tragebene E_T2 ausgerichtet. In dem Tragabschnitt 16 sind Kühlkanäle 26 ausgebildet, die sich in eine Richtung parallel zu der Längsachse L_2 erstrecken und von Kühlmittel durchströmbar sind.

Das Zwischenelement 15 umfasst mehrere Gewindebohrungen 23, die sich entlang einer Bohrungsachse L_23 durch die erste Seitenwand 17 in den Tragabschnitt 16 erstrecken. Die Bohrungsachse L_23 ist parallel zu der zweiten Tragebene E_T15 ausgerichtet. Im vorliegenden Fall liegt die Bohrungsachse L_23 in der zweiten Tragebene E_T15. Die Gewindebohrungen 23 sind als Sacklochbohrung ausgeführt.

Im Bereich eines ersten axialen Endes der ersten Seitenwand 17 sind vier dieser Gewindebohrungen 23 nebeneinander vorgesehen. Diese erstrecken sich jeweils durch eine Auflagefläche 24, die von einer Ausnehmung 25 gebildet wird. Im Bereich des zweiten axialen Endes der ersten Seitenwand 17, des ersten axialen Endes der zweiten Seitenwand 20 und des zweiten axialen Endes der zweiten Seitenwand 20 sind weitere Gruppen von jeweils vier Gewindebohrungen 23 nebeneinander vorgesehen. Diese erstrecken sich ebenfalls durch eine Auflagefläche 24, die von einer Ausnehmung 25 gebildet wird.

Das Gehäuse 1 umfasst darüber hinaus eine dritte Stirnseitenabdeckung 27, die an der ersten Stirnseite des Bodenelements 2 mit diesem verbunden ist, und eine vierte Stirnseitenabdeckung 28, die an der zweiten Stirnseite des Bodenelementes 2 mit diesem verbunden ist. Die erste und die zweite Stirnseitenabdeckung 12, 13 sind jeweils mit dem Bodenelement 2 verschweißt.

Das Gehäuse 1 umfasst darüber hinaus ein drittes Gehäuseelement und ein viertes Gehäuseelement in Form eines zweiten Zwischenelements 15' und eines dritten Zwischenelements 15". Das zweite Zwischenelement 15' und das dritte Zwischenelement 15" sind jeweils identisch zu dem ersten Zwischenelement 15 ausgestaltet. Insofern gilt das im Kontext des Zwischenelements 15 Gesagte auch für das zweite Zwischenelement 15' und das dritte Zwischenelement 15" analog. In den Figuren sind gleiche Merkmale mit gleichen Bezugszeichen versehen, wobei die Merkmale des zweiten Zwischenelements 15' und des dritten Zwischenelements 15" zusätzlich mit einem respektive zwei Apostroph gekennzeichnet sind.

Die Aufnahmefläche 5 des Bodenelements 2 ist mit der unteren Aufnahmefläche 18 des Zwischenelements 15 in dichtender Anlage und die Aufnahmefläche 7 ist mit der unteren Aufnahmefläche 21 des Zwischenelements 15 in dichtender Anlage. Es erstrecken sich mehrere Schrauben 14 durch die genannten Flächen, sodass die ersten Seitenwände 4, 17 und die zweiten Seitenwände 6, 20 der jeweiligen Gehäuseelemente miteinander dichtend verspannt sind. Die erste Stirnseitenabdeckung 12 und die dritte Stirnseitenabdeckung 27 sowie die zweite Stirnseitenabdeckung 13 und die vierte Stirnseitenabdeckung 28 sind mittels weiterer Schrauben dichtend verspannt. Somit wird eine erste Gehäusekammer 37 von dem Bodenelement 2, dem Zwischenelement 15 sowie den vier Stirnseitenabdeckung 12, 13, 27, 28 begrenzt. In der ersten Gehäusekammer 37 kann ein erster Energiespeicher eingesetzt werden.

Die obere Aufnahmefläche 19 des Zwischenelements 15 ist mit der unteren Aufnahmefläche 18' des zweiten Zwischenelements 15' in dichtender Anlage und die obere Aufnahmefläche 22 des Zwischenelements 15 ist mit der unteren Aufnahmefläche 21' des zweiten Zwischenelements 15' in dichtender Anlage. Es erstrecken sich mehrere Schrauben 14 durch die genannten Flächen, sodass die ersten Seitenwände 17, 17' und die zweiten Seitenwände 20, 20' der jeweiligen Gehäuseelemente 15, 15' miteinander dichtend verspannt sind. Die dritten Stirnseitenabdeckungen 27, 27' und die vierten Stirnseitenabdeckung 28, 28'sind jeweils mittels weiterer Schrauben dichtend verspannt. Somit wird eine zweite Gehäusekammer 38 von dem ersten Zwischenelement 15, dem zweiten Zwischenelement 15' sowie den vier Stirnseitenabdeckung 27, 27', 28, 28' begrenzt. In der zweiten Gehäusekammer 38 kann ein zweiter Energiespeicher eingesetzt werden.

Das zweite Zwischenelemente kann, wie in den Figuren 1, 2, 6 und 7 gezeigt, mit einem oder mehreren weiteren Zwischenelementen verbunden sein, sodass weitere Gehäusekammern gebildet werden, in die weitere Energiespeicher eingesetzt werden können. Die Aneinanderreihung von Zwischenelementen kann durch ein nicht dargestelltes Abschlusselement abgeschlossen werden, wobei das Abschlusselement analog zu dem Bodenelement ausgebildet sein kann.

Das Gehäuse 1 weist zumindest ein Lagerelement 29 auf, über das Gehäuse 1 gegenüber einem angrenzenden Element, beispielsweise gegenüber einem Rahmen oder dem Boden, lagerbar respektive abstützbar ist. Hierbei kann das Lagerelement 29 über einen Auflageabschnitt 33 in Kontakt mit dem angrenzenden Element gebracht werden. Der Auflageabschnitt 33 weist dabei ein Durchgangsloch 34 durch die eine Schraube in ein Gewinde in dem angrenzenden Element greifen kann. Das angrenzende Element kann beispielsweise eine Bodenplatte oder ein Fahrzeug sein.

Das Lagerelement 29 weist einen Verbindungsabschnitt 30 auf, der in der in den Figuren 1 bis 5 gezeigten ersten Position des Lagerelements 29 in Anlage mit der ersten Seitenwand 4 des Bodenelements 2 ist und in Anlage mit der ersten Seitenwand 17 des ersten Zwischenelements 15 ist. Hierzu sitzt ein Passabschnitt 31 in der komplementären Ausnehmung 10 des Bodenelements 2 und ein zweiter Passabschnitt 32 in der komplementären Ausnehmung 25 des ersten Zwischenelements 15 ein. Durch den Verbindungsabschnitt 30 mit dem Passabschnitt 31 erstrecken sich jeweils vier Schrauben 35 und greifen in die zugehörigen Gewindebohrungen 8 des Bodenelements 2 ein, sodass das Bodenelement 2 und das Lagerelement 29 über die Schrauben 35 miteinander verspannt sind. Durch den Verbindungsabschnitt 30 mit dem Passabschnitt 32 erstrecken sich jeweils vier Schrauben 36 und greifen in die zugehörigen Gewindebohrungen 23 des ersten Zwischenelements 15 ein, sodass das Zwischenelement 15 und das Lagerelement 29 über die Schrauben 36 miteinander verspannt sind. Es versteht sich, dass das gezeigte Lagerelement 29 und die zugehörigen Anbindung an das Gehäuse 2 über acht Schrauben beispielhaft ist und insbesondere das Lagerelement über mehr oder weniger Schrauben mit dem Gehäuse 2 verbunden sein kann.

Im vorliegenden Fall weist das Gehäuse 1 vier Lagerelement 29 auf, die in der ersten Position an den jeweiligen Ecken mit dem Bodenelement 2 und dem ersten Zwischenelement 15 verbunden sind. Die vier Auflageabschnitte der vier Lagerelemente bilden zusammen eine Lagerebene. Die Lagerebene kann vertikal unterhalb der ersten Tragebene E_T2 angeordnet sein.

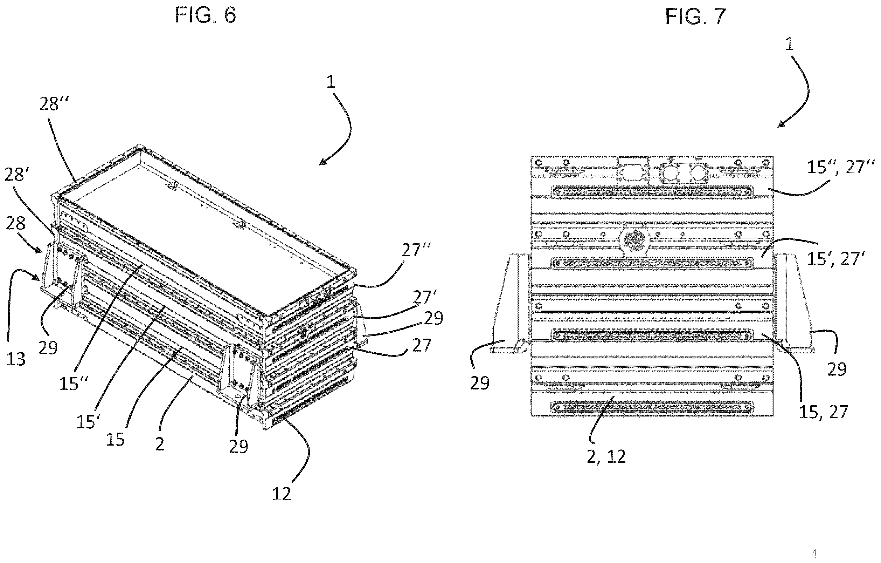

Das Lagerelement kann wahlweise in der in den Figuren 5 und 6 gezeigten zweiten Position angeordnet werden. Dabei kann der Verbindungsabschnitt 30 in Anlage mit der ersten Seitenwand 17 des ersten Zwischenelements 15 und in Anlage mit der ersten Seitenwand 17' des zweiten Zwischenelements 15' sein. Hierzu sitzt der Passabschnitt 31 in der komplementären Ausnehmung 25 des ersten Zwischenelements 15 und der zweiter Passabschnitt 32 in der komplementären Ausnehmung 25' des zweiten Zwischenelements 15' ein. Durch den Verbindungsabschnitt 30 mit dem Passabschnitt 31 erstrecken sich wiederum jeweils vier Schrauben 35 und greifen in die zugehörigen Gewindebohrungen 23 des ersten Zwischenelements 15 ein, sodass das erste Zwischenelement 15 und das Lagerelement 29 über die Schrauben 35 miteinander verspannt sind. Durch den Verbindungsabschnitt 30 mit dem Passabschnitt 32 erstrecken sich dann jeweils die vier Schrauben 36 und greifen in die zugehörigen Gewindebohrungen 23' des zweiten Zwischenelements 15' ein, sodass das zweite Zwischenelement 15' und das Lagerelement 29 über die Schrauben 36 miteinander verspannt sind.

In der zweiten Position sind die vier Lagerelemente an den jeweiligen Ende mit dem ersten Zwischenelement 15 und dem zweiten Zwischenelement 15' verbunden. Die vier Auflageabschnitte der vier Lagerelemente bilden zusammen eine Lagerebene. Die Lagerebene kann vertikal oberhalb der ersten Tragebene E_T2 angeordnet sein.

Es versteht sich, dass die Lagerelemente 29 auch in einer dritten Position mit dem zweiten Zwischenelement 15' und dem dritten Zwischenelement 15' verbunden sein können.

In den Figuren ist eine Ausgestaltung gezeigt, in denen die Lagerelemente 29 jeweils in einem ersten Gehäuseelement und in einem zweiten Gehäuseelement abgestützt sind. Insbesondere ist es bei niedrigen Lasten auch denkbar, dass die Lagerelemente nur in einem Gehäuseelement abgestützt sind.

### Bezugszeichenliste

- 1: Gehäuse
- 2: Bodenelement
- 3: Tragabschnitt
- 4: Seitenwand
- 5: Aufnahmefläche
- 6: Seitenwand
- 7: Aufnahmefläche
- 8: Gewindebohrung
- 9: Auflagefläche
- 10: Ausnehmung
- 11: Kühlkanal
- 12: Stirnseitenabdeckung
- 13: Stirnseitenabdeckung
- 14: Schraube
- 15: Zwischenelement
- 16: Tragabschnitt
- 17: Seitenwand
- 18: Untere Aufnahmefläche
- 19: Obere Aufnahmefläche
- 20: Seitenwand
- 21: Untere Aufnahmefläche
- 22: Obere Aufnahmefläche
- 23: Gewindebohrung
- 24: Auflagefläche
- 25: Ausnehmung
- 26: Kühlkanal
- 27: Stirnseitenabdeckung
- 28: Stirnseitenabdeckung
- 29: Lagerelement
- 30: Verbindungsabschnitt
- 31: Passabschnitt
- 32: Passabschnitt
- 33: Auflageabschnitt
- 34: Durchgangsloch
- 35: Schraube
- 36: Schraube
- 37: Gehäusekammer
- 38: Gehäusekammer

- E: Ebene
- L: Achse

## Patentansprüche

1. Gehäuse, insbesondere für einen Energiespeicher, umfassend:
ein erstes Gehäuseelement (2), das sich in Form eines Prismas mit einer Grundfläche entlang einer Längsachse (L_2) erstreckt,
wobei das erste Gehäuseelement (2) an einer ersten Längsseite eine erste Seitenwand (4) und an einer zweiten Längsseite eine zweite Seitenwand (6) aufweist, zwischen denen sich ein Tragabschnitt (3) erstreckt, der eine erste Tragebene (E_T2) aufspannt, und
ein zweites Gehäuseelement (15), das so quer zu der Längsachse (L_2) von dem Tragabschnitt (3) beabstandet und mit dem ersten Gehäuseelement (2) verbunden ist, dass eine erste Gehäusekammer (37) von dem ersten Gehäuseelement (2) und dem zweiten Gehäuseelement (15) begrenzt ist,
**dadurch gekennzeichnet,**
**dass** ein Lagerelement (29) zum Lagern des Gehäuses (1) gegenüber einem angrenzenden Element über eine erste Schraube (35) mit dem ersten Gehäuseelement (2) verbindbar ist,
wobei die erste Schraube (35) in eine Gewindebohrung (8) des ersten Gehäuseelements (2) eingreift, die Gewindebohrung (8) zumindest abschnittsweise in der ersten Tragebene (E_T2) angeordnet ist und eine Bohrungsachse (L_8) der Gewindebohrung (8) parallel zu der ersten Tragebene (E_T2) angeordnet ist.

2. Gehäuse nach Anspruch 1,
**dadurch gekennzeichnet,**
**dass** das zweite Gehäuseelement (15) in Form eines Prismas ausgestaltet ist, das sich in eine Richtung parallel zu der Längsachse (L_2) mit einer Grundfläche erstreckt,
wobei das zweite Gehäuseelement (15) an einer ersten Längsseite eine erste Seitenwand (17) und an einer zweiten Längsseite eine zweite Seitenwand (20) aufweist, zwischen denen sich ein Tragabschnitt (16) erstreckt, der eine zweite Tragebene (E_T15) aufspannt, und
**dass** das Lagerelement (29) über eine zweite Schraube (36) mit dem zweiten Gehäuseelement (15) verbindbar ist und
**dass** die zweite Schraube (36) in eine Gewindebohrung (23) des zweiten Gehäuseelements (15) eingreift, wobei die Gewindebohrung (23) zumindest abschnittsweise in der zweiten Tragebene (E_T15) angeordnet ist und eine Bohrungsachse (L_23) der Gewindebohrung (23) parallel zu der zweiten Tragebene (E_T15) angeordnet ist.

3. Gehäuse nach einem der Ansprüche 1 oder 2,
**dadurch gekennzeichnet,**
**dass** ein drittes Gehäuseelement (15') in Form eines Prismas ausgestaltet ist, das sich in eine Richtung parallel zu der Längsachse (L_2) mit einer Grundfläche erstreckt,
wobei das dritte Gehäuseelement (15') an einer ersten Längsseite eine erste Seitenwand (17') und an einer zweiten Längsseite eine zweite Seitenwand (20') aufweist, zwischen denen sich ein Tragabschnitt (16') erstreckt, der eine dritte Tragebene (E_T15') aufspannt, und
**dass** das dritte Gehäuseelement (15') so quer zu der Längsachse (L_2) von dem Tragabschnitt (16) des zweiten Gehäuseelements (15) beabstandet und mit dem zweiten Gehäuseelement (15) verbunden ist, dass eine zweite Gehäusekammer (38) von dem zweiten Gehäuseelement (15) und dem dritten Gehäuseelement (15') begrenzt ist.

4. Gehäuse nach Anspruch 3,
**dadurch gekennzeichnet,**
**dass** das zweite Gehäuseelement (15) und das dritte Gehäuseelement (15') die gleiche prismatische Form oder die gleiche Grundfläche des Prismas aufweisen.

5. Gehäuse nach einem der Ansprüche 3 oder 4,
**dadurch gekennzeichnet,**
**dass** das dritte Gehäuseelement (15') eine Gewindebohrung (23') aufweist, wobei die Gewindebohrung (23') zumindest abschnittsweise in der dritten Tragebene (E_T15') angeordnet ist und eine Bohrungsachse (L_23') der Gewindebohrung (23) parallel zu der dritten Tragebene (E_T15') angeordnet ist.

6. Gehäuse nach Anspruch 5,
**dadurch gekennzeichnet,**
**dass** die Gewindebohrung (23) des zweiten Gehäuseelements (15) komplementär zu der ersten Schraube (35) und zu der zweiten Schraube (36) ausgebildet ist, und
**dass** die Gewindebohrung (23') des dritten Gehäuseelements (15') komplementär zu der zweiten Schraube (36) ausgebildet ist.

7. Gehäuse nach einem der Ansprüche 3 bis 6,
**dadurch gekennzeichnet,**
**dass** die erste Tragebene (E_T2), die zweite Tragebene (E_T15) und die dritte Tragebene (E_T15') parallel ausgerichtet sind und
**dass** der Abstand zwischen der ersten Tragebene (E_T2) und der zweiten Tragebene (E_T15) gleich dem Abstand zwischen der zweiten Tragebenen (E_T15) und der dritten Tragebene (E_T15') ist.

8. Gehäuse nach einem der Ansprüche 2 bis 7,
**dadurch gekennzeichnet,**
**dass** das Lagerelement (29) einen Verbindungsabschnitt (30) aufweist, der in Anlage mit der ersten Seitenwand (4) des ersten Gehäuseelements (2) ist und/ oder in Anlage mit der ersten Seitenwand (17) des zweiten Gehäuseelements (15) ist.

9. Gehäuse nach Anspruch 8,
**dadurch gekennzeichnet,**
**dass** der Verbindungsabschnitt (30) des Lagerelements (29) einen ersten Passabschnitt (31) und einen zweiten Passabschnitt (32) aufweist,
**dass** das erste Gehäuseelement (2) eine Ausnehmung (10) aufweist,
**dass** das zweite Gehäuseelement (15) eine Ausnehmung (25) aufweist, und
**dass** das dritte Gehäuseelement (15') eine Ausnehmung (25') aufweist,
wobei die Ausnehmung (10) des ersten Gehäuseelements (2) komplementär zu dem ersten Passabschnitt (31) ausgestaltet ist, und
die Ausnehmung (25) des zweiten Gehäuseelements (15) komplementär zu dem ersten Passabschnitt (31) und dem zweiten Passabschnitt (32) ausgestaltet ist, und
die Ausnehmung (25) des dritten Gehäuseelements (15') komplementär zu dem zweiten Passabschnitt (32) ausgestaltet ist.

10. Gehäuse nach einem der Ansprüche 8 oder 9,
**dadurch gekennzeichnet,**
**dass** das Lagerelement (29) einen Auflageabschnitt (33) aufweist, über den das Lagerelement (29) mit dem angrenzenden Element in Anlage bringbar ist und der sich quer zu dem Verbindungsabschnitt (30) erstreckt.

11. Gehäuse nach einem der Ansprüche 1 bis 10,
**dadurch gekennzeichnet,**
**dass** die erste Seitenwand (4) des ersten Gehäuseelements (2) in Anlage mit der ersten Seitenwand (17) des zweiten Gehäuseelements (15) ist und dass die zweite Seitenwand (6) des ersten Gehäuseelements (2) in Anlage mit der zweite Seitenwand (20) des zweiten Gehäuseelements (15) ist.

12. Gehäuse nach einem der Ansprüche 1 bis 10,
**dadurch gekennzeichnet,**
**dass** an einer ersten Stirnseite des Gehäuses (1) eine erste Stirnseitenabdeckung (12) mit dem ersten Gehäuseelement (2) verbunden ist, und
**dass** an einer zweiten Stirnseite des Gehäuses (1) eine zweite Stirnseitenabdeckung (13) mit dem ersten Gehäuseelement (2) verbunden ist.

13. Gehäuse nach Anspruch 11,
**dadurch gekennzeichnet,**
**dass** an der ersten Stirnseite des Gehäuses (1) eine dritte Stirnseitenabdeckung (27) mit dem zweiten Gehäuseelement (15) verbunden ist, und
**dass** an der zweiten Stirnseite des Gehäuses (1) eine vierte Stirnseitenabdeckung (28) mit dem zweiten Gehäuseelement (15) verbunden ist,
wobei die erste Gehäusekammer (37) von dem ersten Gehäuseelement (2),
dem zweiten Gehäuseelement (15), der ersten Stirnseitenabdeckung (12), der zweiten Stirnseitenabdeckung (13), der dritten Stirnseitenabdeckung (27) und der vierten Stirnseitenabdeckung (28) begrenzt ist.
